# EUROPEAN PATENT SPECIFICATION

(11) **EP 4 268 134 B1**
(45) Date of publication and mention of the grant of the patent: **23.09.2026**
(21) Application number: 22707376.4
(22) Date of filing: 04.02.2022
(51) Int. Cl.: G06N 3/084, G06N 3/006, G06N 3/045, G06N 3/092, G06N 3/098

(54) **TEMPORAL DIFFERENCE SCALING WHEN CONTROLLING AGENTS USING REINFORCEMENT LEARNING**
ZEITUNTERSCHIEDSKALIERUNG BEI DER STEUERUNG VON AGENTEN UNTER VERWENDUNG VON VERSTÄRKUNGSLERNEN
MISE À L'ÉCHELLE DE DIFFÉRENCE TEMPORELLE LORS DE LA COMMANDE D'AGENTS À L'AIDE D'UN APPRENTISSAGE PAR RENFORCEMENT

(30) Priority: 04.02.2021 US 202163145926 P
(43) Date of publication of application: 01.11.2023
(73) Proprietor: GDM Holding LLC, Mountain View, CA 94043 (US)
(72) Inventor: SCHAUL, Tom, London N1C 4AG (GB)
(74) Representative: Marks & Clerk GST
(86) International application number: PCT/EP2022/052751
(87) International publication number: WO 2022/167600

(56) References cited:
- KR-A- 20180 091 842

## Description

### BACKGROUND

This specification relates to reinforcement learning.

In a reinforcement learning system, an agent interacts with an environment by performing actions that are selected by the reinforcement learning system in response to receiving observations that characterize the current state of the environment. Some reinforcement learning systems select the action to be performed by the agent in response to receiving a given observation in accordance with an output of a neural network.

Neural networks are machine learning models that employ one or more layers of nonlinear units to predict an output for a received input. Some neural networks are deep neural networks that include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

KR2018/0091842A and English language equivalent WO2017/083767 describes training neural networks using a prioritized experience memory. The system adjusts a temporal difference learning error by multiplying the error by a weight to correct for a bias introduced by prioritized replay.

### SUMMARY

This specification generally describes a reinforcement learning neural network system that is used to control an agent interacting with an environment. The system may be implemented as one or more computer programs on one or more computers in one or more locations. The reinforcement learning neural network system addresses a problem of how to manage rewards on scales that can vary significantly, and hence can facilitate learning.

The invention is set out in claim 1; further aspects are set out in the dependent claims. Thus there is described a method of training a computer-implemented reinforcement learning neural network system used to control an agent interacting with an environment to perform a task. The method comprises obtaining observations relating to states of the environment, processing the observations to select actions to be performed by the agent in response to the observations, and training the reinforcement learning neural network system using temporal difference (TD) errors. The agent receives rewards in response to the actions, and each temporal difference error is dependent upon at least a difference between one of the rewards and a value estimate generated by the reinforcement learning neural network system.

The method also involves determining a value of a scale factor. A square of the scale factor has at least a first term, dependent upon a variance of the rewards. The method scales the temporal difference error by the scale factor to determine a scaled temporal difference error, and updates parameters of the reinforcement learning neural network system using the scaled temporal difference error.

In some implementations the temporal difference error is also dependent upon a time discounted value estimate generated by the reinforcement learning neural network system, and the square of the scale factor includes a second term. The method may then include determining an estimate of a variance of a time discount factor of the time discounted value estimate, and determining an estimate of an expectation value of returns-squared, where a return comprises a time discounted sum of one or more rewards received after a reinforcement learning time step. The method may then include determining a value for the second term by forming a product of these estimates.

Particular embodiments of the subject matter described in this specification can be implemented so as to realize one or more of the following advantages.

Many complex tasks, e.g., robotic tasks, involve reward scales which can vary across the domain of application, between particular tasks, and across stages of learning, sometimes by orders of magnitude. This can be detrimental to learning and stability, which can in turn result in substantial computational resources being consumed by the learning process. Some existing techniques are unreliable, lack principled basis, and/or fail on various edge cases, which can also result in slow or failed learning, wasteful use of computing and memory resources, and large overall energy consumption. The described techniques address these problems and can result in stable, more reliable, and faster learning, which translates into reduced use of computing and memory resources, and reduced energy consumption.

Implementations of the techniques work across a wide range of rewards and discount factors without the need to tune scaling-related hyper-parameters, and can thus avoid time-consuming, resource intensive and sometimes difficult experiments to choose these. They can also help to make a reinforcement learning system robust to changes in a task or type of task performed. In some applications a reinforcement learning system is trained using multiple different targets with different reward values or time scales; or one large reward might dominate other rewards, inhibiting learning. The described techniques are useful in balancing the various rewards in these cases and can result in large overall performance improvements. Also the described implementations, which are based on reward/return statistics, do not suffer from "noise amplification". This is described in more detail later.

The described techniques are applicable to any temporal-difference based reinforcement learning methods, and implementations of the technique are robust to variations in how the statistics using for determining the scale factor are obtained.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example of a reinforcement learning system.
FIG. 2 shows an example implementation of the reinforcement learning system.
FIG. 3 is a flow diagram of an example process for training a reinforcement learning system.
FIG. 4 is a flow diagram of a second example process for training a reinforcement learning system.
FIGS. 5A and 5B compare different approaches to reward scaling.
FIG. 6 illustrates a problem of noise amplification addressed by the system.

Like reference numbers and designations in the various drawings indicate like elements.

### DETAILED DESCRIPTION

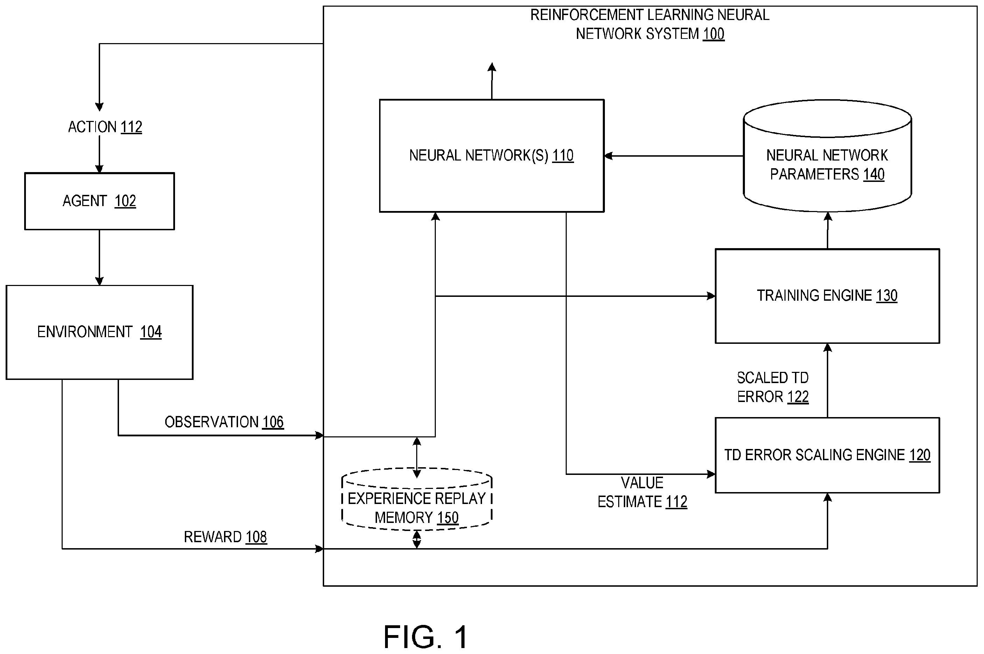

FIG. 1 shows an example of a reinforcement learning neural network system 100 that may be implemented as one or more computer programs on one or more computers in one or more locations. The reinforcement learning neural network system 100 is used to control an agent 102 interacting with an environment 104 to perform one or more tasks, using reinforcement learning techniques.

The reinforcement learning neural network system 100 has one or more inputs to receive data from the environment characterizing a state of the environment, e.g. data from one or more sensors of the environment. Data characterizing a state of the environment is referred to herein as an observation 106.

The data from the environment can also include task rewards. Generally a task reward 108 is represented by a scalar numeric value characterizing progress of the agent towards the task goal and can be based on any event in, or aspect of, the environment. Task rewards may be received as a task progresses or only at the end of a task, e.g. to indicate successful completion of the task.

In general the reinforcement learning neural network system 100 controls the agent by, at each of multiple action selection time steps, processing the observation to select an action 112 to be performed by the agent. At each time step, the state of the environment at the time step depends on the state of the environment at the previous time step and the action performed by the agent at the previous time step. Performance of the selected actions 112 by the agent 102 generally causes the environment 104 to transition into new states. By repeatedly causing the agent 102 to act in the environment 104, the system 100 can control the agent 102 to complete a specified task.

The reinforcement learning neural network system 100 learns to control the agent to perform a task using the observations 106 and rewards 108. However the scale of the rewards can vary across different tasks and also during a particular task, sometimes over many orders of magnitude. For example whilst learning a particular task the actions selected by the system may change, or the environment may change, or new rewards may be discovered. This can contribute to a range of practical difficulties, such as an excessive need for hyper-parameter tuning, instabilities including numerical instabilities, slow learning, and interference between multiple learning objectives. The techniques described herein can mitigate these difficulties whilst preserving the semantics of the rewards. They are also algorithm-agnostic, that is they can be used with a wide range of different reinforcement learning algorithms as they can be applied prior to operation of a specific reinforcement learning algorithm.

In more detail, the reinforcement learning neural network system 100 includes one or more neural networks 110 with neural network parameters 140 stored in memory, a training engine 130, and a temporal difference (TD) error scaling engine 120.

The one or more neural networks 110 are configured to process an input that includes a current observation 106 characterizing the current state of the environment 104, in accordance with the neural network parameters 140, to generate a neural network output for selecting the action 112.

In implementations the one or more neural networks 110 comprise a value function neural network configured to process the observation 106 for the current time step, in accordance with current values of value function neural network parameters, to generate a current value estimate relating to the current state of the environment. The value function neural network may be a state or state-action value function neural network. That is, the current value estimate may be a state value estimate, i.e. an estimate of a value of the current state of the environment, or a state-action value estimate, i.e. an estimate of a value of each of a set of possible actions at the current time step.

The current value estimate may be generated deterministically, e.g. by an output of the value function neural network, or stochastically e.g. where the output of the value function neural network parameterizes a distribution from which the current value estimate is sampled. In some implementations the action 112 is selected using the current value estimate.

Where the value function neural network is a state-action value function neural network, or "Q-value" neural network, the input to the value function neural network may include a possible action and the neural network output may define an estimate of a Q-value of the possible action. The Q-value for an action is an estimate of a "return" that would result from the agent performing the action in response to the current observation and thereafter selecting future actions performed by the agent in accordance with current values of the value function neural network parameters. A return comprises a cumulative measure of rewards received by the agent, for example, a time-discounted sum of rewards. The neural network output may, for example, define a Q-value or it may define one or more parameters of a distribution from which a Q-value may be sampled. The action 112 may be selected based on the Q-value for each possible action e.g., by selecting the action with the highest Q value, or by mapping the Q values to probabilities and sampling an action in accordance with the probabilities. In some cases the action may be selected in accordance with an exploration policy, e.g. by selecting an action randomly with a probability *ε*, i.e. an *ε*-greedy policy.

In some implementations the one or more neural networks 110 also comprise an action selection neural network, configured to process the observation 106 for the current time step, in accordance with current values of parameters of the action selection neural network, to generate an action selection output. Then the action may be selected using the action selection output of the action selection neural network. The action selection output may comprise action selection scores according to which the action 112 is selected, or the output may determine the action 112 directly, or the output may parameterize a distribution e.g. a Gaussian distribution, according to which the action 112 may be selected stochastically. The action selection neural network may share some neural network layers with the value function neural network.

The action selection neural network, more specifically, the action selection neural network parameters, may be updated using value estimates generated by the value function neural network, for example using an actor-critic reinforcement learning technique e.g. using a policy gradient update. The value estimates used may comprise the current value estimate in an online, on-policy method, or value estimates generated using stored experience data in an off-policy method. The value estimates may comprise state value estimates or state-action value estimates, or both.

In general in these implementations the parameters of the reinforcement learning neural network system i.e. the values of the neural network parameters 140, more specifically the value function neural network parameters, are updated using a temporal difference (TD) error. The TD error depends on a difference between the state or state-action value estimate for the current time step and a current reward received in response to the action 112 at the time step, optionally also including an estimate of future rewards. However in the systems described herein the TD error is scaled by a scale factor using temporal difference (TD) error scaling engine 120.

The TD error scaling engine 120 is configured to receive one or more value estimates 112 from the value function neural network, and a reward 108, and to generate a scaled TD error 122. In implementations the scaled TD error 122, *δ̅ₜ*, is generated by determining a temporal difference (TD) error, *δₜ*, and then scaling, e.g. dividing, the TD error by a scale factor, *σ*. Generally, a square of the scale factor, *σ*², represents an estimate of a variance of the TD error, $V \left[δ\right]$. However this estimate of the variance of the TD error is determined using reward and reward-related statistics as described later.

The training engine 130 receives the scaled TD error 122 and one or more observations 106 and rewards 108 from environment 104 and/or from experience replay memory 150, and is configured to implement any conventional TD-based reinforcement learning algorithm to adjust the values of the neural network parameters 140.

In general the TD error comprises a difference between a value estimate, *Vₜ*, from the value function neural network and a TD target. The TD target may comprise an estimated return i.e. an estimate of a time discounted sum of rewards that will be received starting from the current state over the remainder of the task episode, or over some fixed number of future time steps, if the agent is controlled using outputs of the reinforcement learning neural network system 100. The sum is time discounted because future rewards are discounted by a time discount factor γ in the range [0,1] when computing the return.

In implementations the TD target comprises a sum of the current reward, *Rₜ*, received in response to the action 112 and a (discounted) value estimate, ${V}_{t + 1}^{′}$, determined by processing an observation at the next time step using the value function neural network. For example, in implementations ${δ}_{t} = {R}_{t} + {γ}_{t} {V}_{t + 1}^{′} - {V}_{t}$ and the TD error is scaled to obtain the scaled TD error $\overline{{δ}_{t}} = \frac{{δ}_{t}}{σ}$ and *δ̅ₜ*, is used in place of *δₜ* by training engine 130 in conventional TD-based reinforcement learning algorithm. In some implementations *γₜ* may be 0.

In some implementations the value estimate is generated directly by the value function neural network, in other implementations it may be generated indirectly. For example a state value estimate for the observation at the next time step, *o*_{*t*+1}, may be determined from a highest Q-value output for any action, *a*, of the set off possible actions, e.g. ${V}_{t + 1}^{′} = {max}_{a} Q \left({o}_{t + 1}, a\right)$. In some implementations . ${V}_{t + 1}^{′}$ may be generated by a target value function neural network, e.g. a copy of the value function neural network but having value function neural network parameters from an earlier time step.

In some implementations the reinforcement learning neural network system 100 includes experience replay memory 150 configured to store experience data, i.e. observations 106 and rewards 108, for use by training engine 130. For example experience replay memory 150 may store experience tuples generated as a result of the agent interacting with the environment. An experience tuple may comprise data defining, for each of a plurality of the time steps, at least the observation, the action selected, the reward received, and a next observation. Such experience data may be used for training when the training engine 130 implements an off-policy reinforcement learning algorithm.

The reinforcement learning neural network system 100 generates a reinforcement learning system output to control the agent 102 to perform the action 112. This may comprise an output derived from the value function neural network e.g. derived from a Q-value output of the value function neural network, or it may comprise an output derived from the action selection output of the action selection neural network (if present). The action 112 may be a discrete action selected from a set of possible actions or a continuous action i.e. an action defined by a continuous variable, such as motor torque.

Merely as one example, the agent may be a mechanical e.g. robotic agent interacting with a real-world environment e.g. by moving within the environment or physically manipulating an object in the environment. Then the observation 106 may include observations of the position or state of motion of the agent or of joints or other parts of the agent, and/or observations about the position or state of motion of one or more objects in the environment, e.g. as one or more images or as sensor data. The reinforcement learning neural network system 100 provides a control signal output to control the agent to perform a mechanical action e.g. to move the agent or part of the agent. A reward may represent completion or progress towards completion of a learned task. After the action is performed a next observation characterizes a subsequent state of the environment, i.e. an effect of the action.

As previously mentioned, a square of the scale factor, *σ*², represents an estimate of a variance of the TD error, $V \left[δ\right]$. One approach to calculating the scale factor would be to measure actual TD errors encountered during training and use their variance for normalization. However this can result in "noise amplification". Noise amplification occurs where, as the accuracy of the value estimate improves during training, error-based rescaling amplifies whatever residual approximation error is left. This could be seen as beneficial but can cause practical difficulties and, of particular importance, can lead to unstable learning dynamics. Thus instead of using this approach the described techniques calculate the scale factor indirectly from reward/return statistics, which mitigates noise amplification.

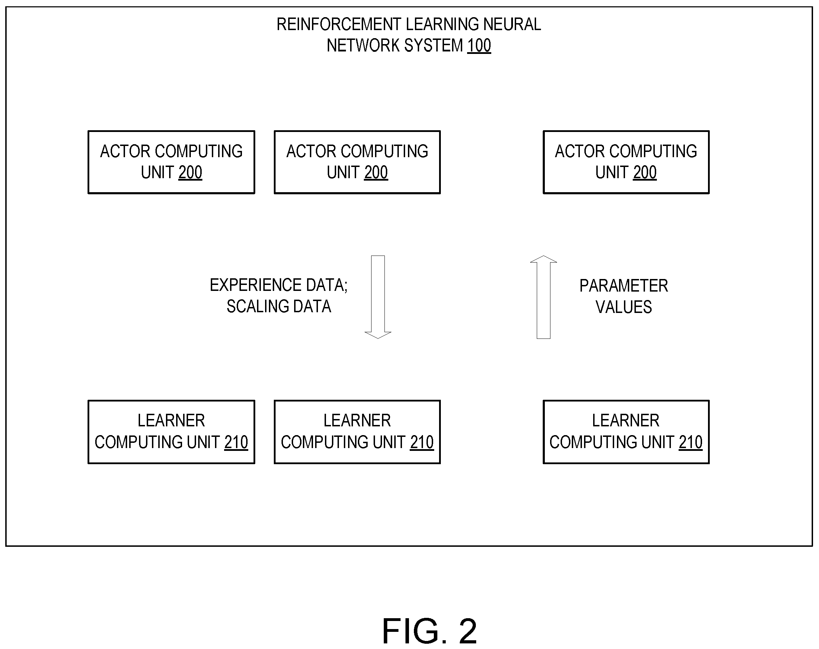

FIG. 2 shows an example of a distributed implementation of the reinforcement learning neural network system 100 of FIG. 1. This example implementation has multiple actor computing units 200 and one or more learner computing units 210; it may e.g. use a Recurrent Replay Distributed DQN (R2D2) algorithm and architecture (Kapturowski et al., 2019). The actor computing units 200 generate experience data that is written to a shared experience replay memory 150 (not shown in FIG. 2), and the learner computing unit(s) 210 samples batches of experience sequences from the experience replay memory 150 and determines updates to neural network parameters 140 e.g. by gradient descent on a reinforcement learning loss. The actor computing units 200 periodically obtain the most recent values of these parameters for controlling the agent 102 to perform the actions. The actor computing units 200 also report scaling data to the learner computing unit(s) 210 for calculating the scale factor, *σ*, in particular reward, discount, and return histories. The learner computing unit(s) 210 determines running estimates of these to calculate the scaled TD error 122.

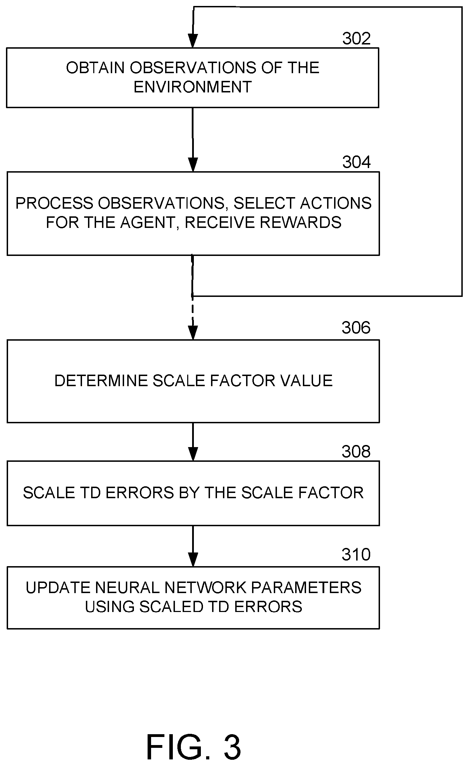

FIG. 3 is a flow diagram of a first example process for determining and using a scaled TD error for training a system of one or more computers located in one or more locations, such as the reinforcement learning neural network system 100.

The process causes the system to control an agent interacting with an environment to perform a task. This involves obtaining observations characterizing current states of the environment (step 302), and processing the observations to select actions to be performed by the agent in response to the observations (step 304). The agent receives rewards in response to the actions, the rewards characterizing progress made in the environment as a result of the agent performing the selected action.

The process also involves training the reinforcement learning neural network system using scaled temporal difference (TD) errors. Each TD error is dependent upon at least a difference between one of the rewards and a value estimate generated by the reinforcement learning neural network system.

A scaled TD error is determined by first determining a value of the scale factor, *σ*, (step 306). The square of the scale factor *σ*² has, i.e. is defined by or linearly dependent on, at least a first term. The value of the first term is dependent upon a variance of the rewards, in implementations linearly dependent upon or equal to the variance of the rewards. Thus implementations of the process determine the value of the first term by determining the variance of the rewards, $V \left[R\right]$. The variance of the rewards may be determined online e.g. by keeping a running estimate of the variance, or offline e.g. based on stored data. In implementations the variance of the rewards is determined based on the interactions of the agent with the environment over multiple episodes, in some implementations over all the interactions of the agent with the environment since training first started, in other implementations just tracking statistics over a recent, i.e. faster, time scale.

The process then scales each TD error by the scale factor to determine the scaled TD error (step 308), and trains the reinforcement learning neural network system 100 by updating the neural network parameters 140 using the scaled TD errors (step 310). The scale factor may be updated for each TD error that it is applied to, or the same scale factor may be used to scale multiple TD errors before it is updated, e.g. it may be updated once per episode. The reinforcement learning neural network system may be trained online or offline, e.g. by backpropagating gradients of a reinforcement learning objective function dependent upon the scaled TD errors.

In some implementations the temporal difference error depends on a time discounted value estimate generated by the reinforcement learning neural network system. The square of the scale factor *σ*² may then have, i.e. be defined by or linearly dependent on the value of a second term, and the process may also determine the value of the second term. Determining the value of the second term may comprise determining an estimate of a variance of a time discount factor of the time discounted value estimate, $V \left[γ\right]$, determining an estimate of an expectation value of (estimated) returns-squared, $E \left[{G}^{2}\right]$, and then forming a product of the estimate of the variance of a time discount factor and the estimate of the expectation value of the returns-squared. Again the time discount factor and return statistics may be determined e.g. by calculating running estimates, or may be determined from stored data. Again, in implementations the statistics are determined based on the interactions of the agent with the environment over multiple episodes, in some implementations over all the interactions of the agent with the environment since training first started, in other implementations just tracking statistics over a recent i.e. faster time scale.

In some implementations the scale factor is defined as ${σ}^{2} : = V \left[R\right] + V \left[γ\right] E \left[{G}^{2}\right] \approx V \left[δ\right]$

As previously, an estimated return, G, represents a time discounted sum of one or more rewards received after a reinforcement learning time step. For example the return, *Gₜ*, at a current time step *t,* until a termination time step *T,* may be defined in terms of rewards *Rₜ* as ${G}_{t} = {R}_{t} + {γG}_{t + 1} = {\sum }_{t ′ = t}^{T} {γ}^{t ′ - t} {R}_{t ′}$*.*

The time discount factor, *γ*, is treated as a random variable. In general it may be zero at the end of an episode and it may be (but need not be) constant throughout an episode. Where for example *γ* has a constant value *γ^{cst}* throughout an episode, which is common, then $V \left[γ\right] = \frac{T - 1}{{T}^{2}} {\left({γ}^{cst}\right)}^{2}$ where *T* is an average episode length. Thus in some implementations determining $V \left[γ\right]$ may involve determining the (average) duration of a task episode and combining this with a value of the time discount factor. Where *γ^{cst}* has a value close to 1 then $V \left[γ\right] \approx 1 / T$. An episode is generally a period during which the agent attempts to perform the specified task. It may be defined by a particular number or threshold number of time steps, or may continue until some other termination criterion has been satisfied, e.g. until a reward is received indicating that the task has successfully been performed. In some other implementations the time discount factor may vary with time and/or it may be different for different value estimates determined by the system.

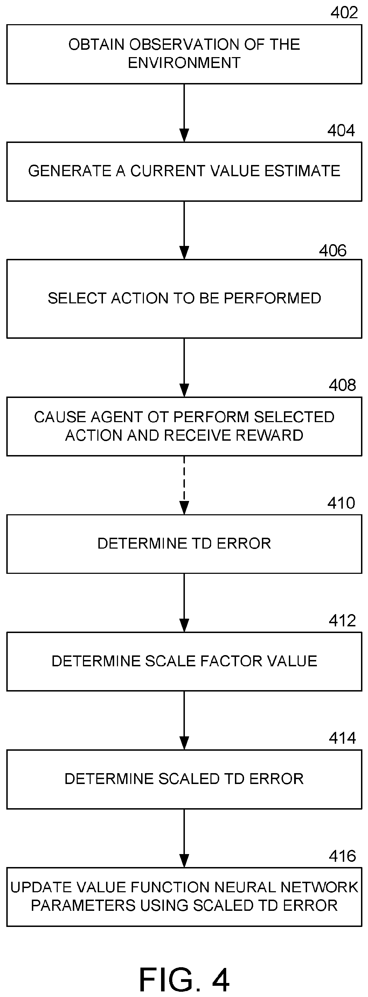

FIG. 4 is a flow diagram of a second example process for determining and using a scaled TD error for training a system of one or more computers located in one or more locations, such as the reinforcement learning neural network system 100.

The process of FIG. 4 is performed, in part for each of a sequence of action selection time steps, and in part for each of a sequence of training time steps. The training time steps may be the same as the action selection time steps, e.g. during online (on-policy) reinforcement learning, or the training time steps may be used to process experience data previously stored in the experience replay memory 150 e.g. during offline (off-policy) reinforcement learning.

For each of the action selection time steps the process involves obtaining an observation for a current time step characterizing a current states of the environment (step 402), and processing the observation for the current time step using the value function neural network to generate a current value estimate relating to the current state of the environment (step 404). The process then selects an action to be performed by the agent in response to the observation (406).

In one example the action is selected using the current value estimate, where the value function neural network is a Q-value neural network, e.g. by choosing an action with a highest action value using an ε-greedy approach, or by sampling an action from possible actions based on a score distribution.

In another example the action is selected by processing the observation for the current time step using an action selection neural network to generate an action selection output that is used to select the action. The action selection neural network parameters may then be updated using value estimates generated by the value function neural network, e.g. in an actor-critic reinforcement learning system. In some implementations the value estimates generated by the value function neural network may be used as a baseline e.g. in a policy gradient update.

The process then involves causing the agent to perform the selected action and, in response, receiving a reward for the current time step (which may be zero), the reward characterizing progress made in the environment as a result of the agent performing the selected action (step 408). In response to the action the environment transitions to a next state of the environment.

For each of the training time steps the process involves determining a temporal difference error between a first value estimate and a sum (step 410). The first value estimate relates to a first one of the training time steps, e.g. the current time step in an online implementation, or a first time step from, e.g. in a tuple of, the stored experience data. The first value estimate is generated by processing an observation for the first time step using the value function neural network. The sum comprises a sum of the reward at the first time step, i.e. from the action performed at the first time step, and a time discounted value estimate for a subsequent state of the environment at a subsequent one of the training time steps. The subsequent training time step may be one or more training time steps after the first training time step, e.g. a next training time step. The temporal difference error may be determined by subtracting the first value estimate from the sum.

Depending upon the implementation the value function neural network used to generate the time discounted value estimate may be different to the value function neural network used to select the actions, e.g. it may be a target value function neural network. Such a target value function neural network may have the same structure as the value function neural network but a different set of target value function neural network parameter values (weights). For example it may have a copy of an earlier version of the parameters than those used for selecting a current action. As previously described, the time discounted value estimate may be generated by applying the time discount factor, *γ*, to a value estimate, e.g. from the value function neural network or from a target value function neural network, so that the time discount factor multiplies the value estimate.

The process also involves determining a value of the scale factor for each training time step (step 412). As previously described, a square of the scale factor, i.e. the scale factor squared, has a first term that is dependent, e.g. linearly, upon the variance of the rewards. The value of the scale factor may be recalculated at each time step but this is not essential and it may be recalculated at longer intervals. Thus determining the value of the scale factor for a training time step may comprise reading a previously calculated value from memory, or simply determining that the value to be used should be one calculated for a previous time step.

In implementations determining the value of the scale factor comprises determining an estimate of the variance of the rewards from the rewards received e.g. at the action selection time steps or retrieved during the training time steps, and using the estimate of the variance of the rewards to determine the first term (and then taking a square root to determine the scale factor). Where the reinforcement learning uses experience replay memory 150 the rewards used to determine the estimate of the variance of the rewards may be rewards from the action selection time steps, or rewards from the experience replay memory used in the training time steps, or both. In general each may provide a useful estimate of the variance.

The temporal difference error is scaled by the scale factor, e.g. by dividing the temporal difference error by the scale factor, to determine a scaled temporal difference error (step 414). The process also involves updating the value function neural network parameters (of the value function neural network used for selecting the actions) using the scaled temporal difference error e.g. by backpropagating gradients of an optimization function dependent on the scaled temporal difference error (step 416).

In implementations the value function neural network is trained during each of the plurality of training time steps for which the value of the scale factor is determined. However there may be additional training time steps during which the value function neural network parameters are updated but the scale factor is left unchanged. That is, the scale factor may be updated at every training time step or only at some training time steps e.g. once per episode e.g. at the end of each episode.

This technique may be employed in any reinforcement learning method that uses temporal difference learning to learn a value function, such as a state value function or state-action value function. This includes on- and off-policy Q-learning, and actor critic reinforcement learning in which a state value (V) or state-action value (Q) is used as a critic when updating neural network parameters defining an action selection policy.

As previously described, in some implementations the square of the scale factor includes a second term, added to the first term. The process may then comprise determining a value for the second term by determining an estimate of the variance of the time discount factor, γ, determining an estimate of an expectation value of a square of the returns, and forming a product of these two estimates. In implementations the second term is linearly dependent on this product. To determine the scale factor the first and second terms may be summed and a square root taken of the sum.

In implementations a return is estimated from one or more rewards and the time discounted value estimate, and may be determined based on current actions or using experience data from the experience replay memory 150. For example an *n*-step return accumulates *n* rewards in hindsight after an n-step delay, a sum in which each successive reward after the first is discounted, i.e. multiplied by, a successive power of *γ*, as described above, and the value estimate is time discounted by *γⁿ*, where n is an integer equal to or greater than 1.

Thus the TD error may be an n-step TD error determined as a difference between a current value estimate and a sum of the current reward, *n*-1 subsequent rewards, and a time discounted value estimate for the nth subsequent state of the environment i.e. a time discounted value estimate for an observation *n* time steps later.

As previously described, the process may include maintaining a target value function neural network with target value function neural network parameters. The method may then comprise processing an observation of the subsequent state of the environment, obtained from the experience replay memory or online, using the target value function neural network to determine a value estimate for the subsequent state of the environment. The time discount factor is then applied to determine the time discounted value estimate for the subsequent state of the environment.

Where a target value function neural network is used the square of the scale factor may include a third (added) term, to account for a difference in value estimates from the value function neural network and from the target value function neural network. This third term, Δ*V*², may be determined from this difference in value estimates, where the difference is computed by using the value function neural network and the target value function neural network to process the same observation.

For example in the process of FIG. 4 the first value estimate, *V(ot),* may be generated by processing an observation, *oₜ*, for the first time step using the value function neural network, and another value estimate for the same observation, *V'(ot),* may be generated by processing the observation using the target value function neural network. The third term, Δ*V*², may then be determined from an estimate of an expectation value of a squared difference between these value estimates. For example the third term may be (linearly) dependent on the squared difference, e.g. as $Δ {V}^{2} = E \left[{\left(V′\left({o}_{t}\right)-V\left({o}_{t}\right)\right)}^{2}\right]$. To determine the scale factor the first, and second and third, terms may be summed and a square root taken of the sum. Empirically, however, Δ*V*² can be small and may be omitted.

A process for training a reinforcement learning system as described above may include initializing the value of the scale factor to a non-zero value, in particular where the temporal difference error is divided by the scale factor to determine the scaled temporal difference error. For example the value of the scale factor may be initialized to max(*σ*, *σ_{V}*) where *σ_{V}* is the noise level of the value estimate at initialization of the value function neural network, e.g. ≈ 10⁻². In some implementations the value of the scale factor is based on a value, *σ_{batch}*, determined from a current batch of data being used for training, e.g. as max(*σ*,*σ_{V},σ_{batch}*). This can be used to ensure that a TD error, e.g. from the first non-zero reward encountered, is scaled before it is used for training.

The training process may include initializing a bias weight of the value function neural network to a value dependent on an average value of the rewards or returns e.g. an expectation value, i.e. average, of the returns, $E \left(G\right)$. This can be useful when the rewards (and hence returns) are significantly offset from zero. The average may be based, e.g., on some initial statistics.

In general the statistics for determining and scaling the temporal difference error may be obtained online or by sampling experience tuples from the experience replay memory 150. When the reinforcement learning system is trained using stored experience data the statistics may nonetheless be determined from running estimates based on current interactions with the environment. In some implementations the statistics may represent cumulative statistics of the interactions of the agent with the environment; in other implementations the statistics may track the interactions e.g. using moving averages or similar approaches. The scale factor may be determined at each training or action selection time step or for groups of time steps.

In some implementations the value function neural network may have multiple heads, each configured to generate a respective value estimate. For example the different heads may be associated with different reward scales or time discount factors. Here a "head" refers to one or more neural network layers having an input from a shared, value function neural network torso. Training the reinforcement learning system may then involve selecting a head to use randomly or according to a policy, e.g. selecting a head that is most likely to generate high returns. The training process may then comprise determining a value of the scale factor for each head and scaling a respective temporal difference error for the head for updating the value function neural network parameters, i.e. those of the head and of the shared torso.

Where the process of training the value function neural network includes sampling experience tuples from the experience replay memory for training the value function neural network, the sampling may be prioritized using a priority that is dependent on a magnitude of the scaled temporal difference error (so that larger scaled TD errors have greater priority), thus facilitating learning. This may include determining a priority for each experience tuple and storing this with the experience tuple. Using a priority that depends on the scaled TD errors can inhibit a large reward from dominating when otherwise the associated environment transition(s) might be replayed too frequently.

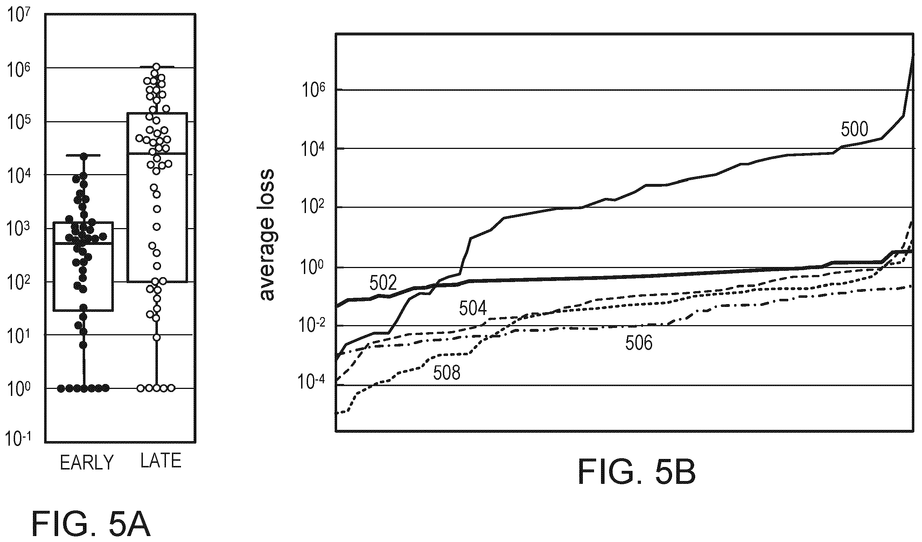

FIGS. 5A and 5B compare different approaches to reward scaling. FIG. 5A shows undiscounted rewards (y-axis) for some example tasks, illustrating that these can vary by orders of magnitude and that they can change by orders of magnitude between early and late stages of learning, an effect that generally arises from a combination of factors. FIG. 5B compares empirical average loss (y-axis) for five different ways of scaling rewards across a range of different tasks (x-axis): Curve 500 shows unscaled rewards, curve 502 rewards scaled as described herein, curve 504 clipped rewards, curve 506 rewards scaled as described in arXiv:1809.04474, and curve 508 rewards scaled using a non-linear transform that reduces large magnitude rewards whilst leaving small magnitude rewards unaffected. The describe approach provides the best reward scaling. Also reward clipping breaks the task semantics, using a non-linear transform shifts the emphasis of learning, and the approach described in arXiv:1809.04474 is harder to implement, involves multiple tunable hyperparameters, and can suffer from noise amplification.

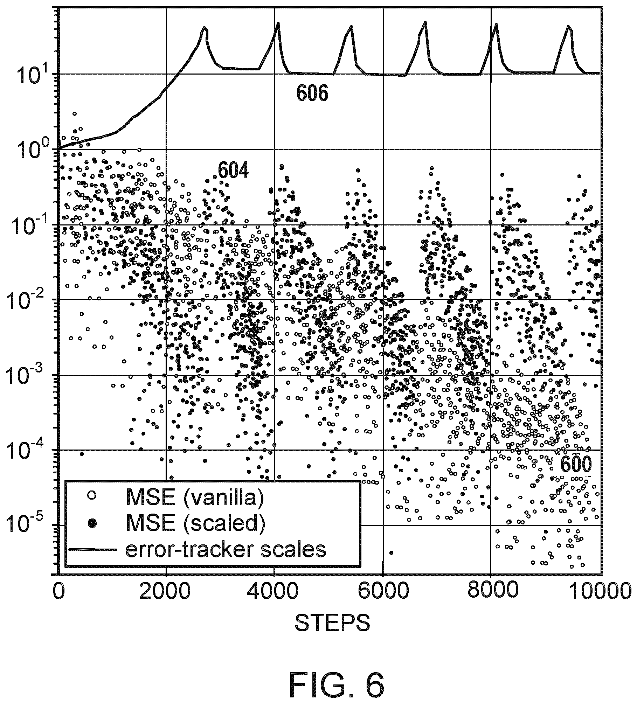

FIG. 6 illustrates noise amplification where, as the accuracy keeps improving, error-based rescaling continually amplifies whatever residual approximation error is left, potentially hitting numerical instabilities and creating unstable dynamics. FIG. 6 shows an example in which the ideal learned weights are all zero; learning these is illustrated by trend 600. However a simple error rescaling method that is based on recent error statistics, illustrated by trend 602, has a different behavior: Initially learning is faster but it then becomes unstable lading to 1000x amplification by the scale factor (curve 604). This pattern repeats and the weights never converge.

In some implementations, the environment is a real-world environment, the agent is a mechanical agent interacting with the real-world environment, e.g., a robot or an autonomous or semi-autonomous land, air, or sea vehicle operating in or navigating through the environment, and the actions are actions taken by the mechanical agent in the real-world environment to perform the task. For example, the agent may be a robot interacting with the environment to accomplish a specific task, e.g., to locate an object of interest in the environment or to move an object of interest to a specified location in the environment or to navigate to a specified destination in the environment.

In these implementations, the observations may include, e.g., one or more of: images, object position data, and sensor data to capture observations as the agent interacts with the environment, for example sensor data from an image, distance, or position sensor or from an actuator.

For example in the case of a robot, the observations may include data characterizing the current state of the robot, e.g., one or more of: joint position, joint velocity, joint force, torque or acceleration, e.g., gravity-compensated torque feedback, and global or relative pose of an item held by the robot.

In the case of a robot or other mechanical agent or vehicle the observations may similarly include one or more of the position, linear or angular velocity, force, torque or acceleration, and global or relative pose of one or more parts of the agent. The observations may be defined in 1, 2 or 3 dimensions, and may be absolute and/or relative observations.

The observations may also include, for example, sensed electronic signals such as motor current or a temperature signal; and/or image or video data for example from a camera or a LIDAR sensor, e.g., data from sensors of the agent or data from sensors that are located separately from the agent in the environment.

In these implementations, the actions may be control inputs to control the robot, e.g., torques for the joints of the robot or higher-level control commands, or the autonomous or semi-autonomous land, air, sea vehicle, e.g., torques to the control surface or other control elements e.g. steering control elements of the vehicle, or higher-level control commands.

In other words, the actions can include for example, position, velocity, or force/torque/acceleration data for one or more joints of a robot or parts of another mechanical agent. Action data may additionally or alternatively include electronic control data such as motor control data, or more generally data for controlling one or more electronic devices within the environment the control of which has an effect on the observed state of the environment. For example in the case of an autonomous or semi-autonomous land or air or sea vehicle the actions may include actions to control navigation e.g. steering, and movement e.g., braking and/or acceleration of the vehicle.

In some implementations the environment is a simulation of the above-described real-world environment, and the agent is implemented as one or more computers interacting with the simulated environment. For example the simulated environment may be a simulation of a robot or vehicle and the reinforcement learning system may be trained on the simulation and then, once trained, used in the real-world.

In the case of an electronic agent the observations may include data from one or more sensors monitoring part of a plant or service facility such as current, voltage, power, temperature and other sensors and/or electronic signals representing the functioning of electronic and/or mechanical items of equipment. For example the real-world environment may be a manufacturing plant or service facility, the observations may relate to operation of the plant or facility, for example to resource usage such as power consumption, and the agent may control actions or operations in the plant/facility, for example to reduce resource usage. In some other implementations the real-world environment may be a renewal energy plant, the observations may relate to operation of the plant, for example to maximize present or future planned electrical power generation, and the agent may control actions or operations in the plant to achieve this.

In some other applications the agent may control actions in a real-world environment including items of equipment, for example in a data center, in a power/water distribution system, or in a manufacturing plant or service facility. The observations may then relate to operation of the plant or facility. For example the observations may include observations of power or water usage by equipment, or observations of power generation or distribution control, or observations of usage of a resource or of waste production. The actions may include actions controlling or imposing operating conditions on items of equipment of the plant/facility, and/or actions that result in changes to settings in the operation of the plant/facility e.g. to adjust or turn on/off components of the plant/facility.

In another application, the agent may provide actions to control a renewable power generation system such as a wind or solar farm, e.g. based on predicted wind or solar irradiance, to increase the efficiency of operation of the system.

As another example, the environment may be a chemical synthesis or protein folding environment such that each state is a respective state of a protein chain or of one or more intermediates or precursor chemicals and the agent is a computer system for determining how to fold the protein chain or synthesize the chemical. In this example, the actions are possible folding actions for folding the protein chain or actions for assembling precursor chemicals/intermediates and the result to be achieved may include, e.g., folding the protein so that the protein is stable and so that it achieves a particular biological function or providing a valid synthetic route for the chemical. The agent is a mechanical agent that performs or controls the protein folding actions or chemical synthesis steps selected by the system automatically without human interaction. The observations may comprise direct or indirect observations of a state of the protein or chemical/ intermediates/ precursors.

In a similar way the environment may be a drug design environment such that each state is a respective state of a potential pharmachemical drug and the agent is a computer system for determining elements of the pharmachemical drug and/or a synthetic pathway for the pharmachemical drug. The drug/synthesis may be designed based on a reward derived from a target for the drug, for example in simulation. The agent is a mechanical agent that performs or controls synthesis of the drug.

The environment may be a simulated environment that is a simulation of a particular real-world environment. Generally in the case of a simulated environment the observations may include simulated versions of one or more of the previously described observations or types of observations and the actions may include simulated versions of one or more of the previously described actions or types of actions. For example the simulated environment may be a motion simulation environment, e.g., a driving simulation or a flight simulation, and the agent may be a simulated vehicle navigating through the motion simulation. In these implementations, the actions may be control inputs to control the simulated user or simulated vehicle.

When the simulated environment is a simulation of a particular real-world environment the system is used to select actions in the simulated environment during training or evaluation of the control neural network and, after training or evaluation or both are complete, may be deployed for controlling a real-world agent in the real-world environment that is simulated by the simulated environment. This can avoid unnecessary wear and tear on and damage to the real-world environment or real-world agent and can allow the control neural network to be trained and evaluated on situations that occur rarely or are difficult to re-create in the real-world environment.

In some cases the system is partly trained using a simulation of a mechanical agent in a simulation of a real-world environment, and afterwards deployed to control the mechanical agent in the real-world environment that was the subject of the simulation. In such cases the observations of the simulated environment relate to the real-world environment, and the selected actions in the simulated environment relate to actions to be performed by the mechanical agent in the real-world environment.

Optionally, in any of the above implementations, the observation at any given time step may include data from a previous time step that may be beneficial in characterizing the environment, e.g., the action performed at the previous time step, the reward received at the previous time step, or both.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a PyTorch framework, a Microsoft Cognitive Toolkit framework, an Apache Singa framework, or an Apache MXNet framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

Particular embodiments of the subject matter have been described. Other embodiments are within the scope of the following claims. As one example, the processes depicted in the accompanying figures do not necessarily require the particular order shown, or sequential order, to achieve desirable results. In some cases, multitasking and parallel processing may be advantageous.

## Claims

1. A method of training a computer-implemented reinforcement learning neural network system (100) used to control an agent (102) interacting with an environment (104) to perform a task, the method comprising:
obtaining observations (106) of states of the environment;
processing the observations to select actions to be performed by the agent in response to the observations, wherein the agent receives rewards (108) in response to the actions;
training the reinforcement learning neural network system using temporal difference errors, wherein each temporal difference error is dependent upon at least a difference between one of the rewards and a value estimate generated by the reinforcement learning neural network system; the method further comprising:
determining a value of a scale factor, wherein a square of the scale factor has a first term dependent upon a variance of the rewards;
scaling the temporal difference error by the scale factor to determine a scaled temporal difference error (122); and
updating parameters of the reinforcement learning neural network system using the scaled temporal difference error; wherein
i) the agent is a mechanical agent, the environment is a real-world environment, and the actions are actions taken by the mechanical agent in the real-world environment to perform the task; or the agent is a simulation of a mechanical agent, the environment is a simulation of a real-world environment, the actions are simulated actions taken by the simulated mechanical agent in the simulation of the real-world environment to perform the task, and wherein after the training the method is used to control the mechanical agent in the real-world environment to perform the task; or
ii) the environment is a real-world manufacturing plant or service facility, the agent is an electronic agent controlling items of equipment in the manufacturing plant or service facility to perform the task.

2. The method of claim 1 wherein temporal difference error is further dependent upon a time discounted value estimate generated by the reinforcement learning neural network system, and wherein the square of the scale factor includes a second term, the method further comprising determining a value for the second term by:
determining an estimate of a variance of a time discount factor of the time discounted value estimate;
determining an estimate of an expectation value of returns-squared, wherein a return comprises a time discounted sum of one or more rewards received after a reinforcement learning time step; and
forming a product of the estimate of the variance of a time discount factor and the estimate of the expectation value of the returns-squared.

3. The method of claim 1 or 2, wherein the reinforcement learning neural network system comprises a value function neural network (110), the method comprising,
for each of a plurality of action selection time steps:
obtaining the observation for a current time step characterizing a current state of the environment;
processing the observation for the current time step using the value function neural network and in accordance with current values of value function neural network parameters, to generate a current value estimate relating to the current state of the environment;
selecting an action to be performed by the agent in response to the observation, using the current value estimate or using an action selection neural network updated using value estimates generated by the value function neural network; and
causing the agent to perform the selected action and, in response, receiving a reward for the current time step characterizing progress made in the environment as a result of the agent performing the selected action, the environment transitioning to a next state of the environment; and
wherein the method further comprises, for each of a plurality of training time steps:
determining a temporal difference error between a first value estimate for a first one of the training time steps generated by processing the observation for the first time step using the value function neural network, and a sum of the reward at the first time step and a time discounted value estimate for a subsequent state of the environment at a subsequent one of the time steps;
determining the value of the scale factor;
scaling the temporal difference error by the scale factor to determine the scaled temporal difference error; and
updating the values of the value function neural network parameters using the scaled temporal difference error.

4. The method of claim 3 wherein determining the value of the scale factor comprises determining an estimate of the variance of the rewards from the rewards received at the time steps, and using the estimate of the variance of the rewards to determine the first term.

5. The method of claim 3 or 4 wherein the square of the scale factor includes a second term, the method further comprising determining a value for the second term by:
determining an estimate of a variance of a time discount factor, wherein the time discount factor is a multiplier of the time discounted value estimate;
determining an estimate of an expectation value of returns-squared, wherein a return comprises a time discounted sum of one or more rewards received after a time step;
forming a product of the estimate of the variance of a time discount factor and the estimate of the expectation value of the returns-squared.

6. The method of any of claims 2-5 when dependent on claim 2, comprising:
maintaining a target value function neural network with target value function neural network parameters and the same structure as the value function neural network;
processing an observation of the next state of the environment using the target value function neural network to determine a value estimate for the subsequent state of the environment; and
applying a time discount factor to the value estimate for the subsequent state of the environment to determine the time discounted value estimate for the subsequent state of the environment.

7. The method of claim 6 wherein the square of the scale factor includes a third term, the method further comprising determining a value for the third term by:
determining an estimate of an expectation value of a squared difference between the first value estimate and a value estimate for the state of the environment at the first time step determined by processing the observation for the first time step using the target value function neural network.

8. The method of any preceding claim wherein the value function neural network has multiple heads each to generate a respective first value estimate, the method comprising:
determining a respective value of the scale factor for each head; and
scaling a respective temporal difference error for each head by the scale factor to determine a respective scaled temporal difference error for updating the values of the value function neural network parameters.

9. The method of any preceding claim wherein the temporal difference error is an *n-*step temporal difference error, the method comprising determining the n-step temporal difference error between a sum of i) the reward ii) n-1 subsequent rewards and iii) a time discounted value estimate for the nth subsequent state of the environment, and a or the first value estimate.

10. The method of any one of claims 1-9 comprising:
maintaining an experience replay memory (150) that stores experience tuples generated as a result of the agent interacting with the environment, wherein the experience tuples identify, for each of a plurality of the time steps, at least: the observation, the action selected, the reward received, and a next observation; and
sampling the experience tuples in the experience replay memory for performing the plurality of training time steps, in particular prioritizing the sampling using a priority dependent on a magnitude of the scaled temporal difference error.

11. The method of any preceding claim further comprising initializing the value of the scale factor to a non-zero value.

12. The method of any one of claims 3-11 when dependent on claim 3, wherein the method is performed online, the plurality of training time steps corresponds to the plurality of action selection time steps, and the first value estimate for the first time step is the current value estimate for the current time step.

13. The method of any one of claims 3-11 when dependent on claim 3, wherein the value function neural network comprises an action-value function neural network (110) for determining an action value for each of a plurality of possible actions, wherein the current value estimate is used to determine an action value for each of the possible actions, wherein selecting the action to be performed by the agent in response to the observation comprises selecting the action based on the action value for each of the possible actions, and wherein the time discounted value estimate for a subsequent state of the environment at a subsequent one of the time steps comprises a time discounted action value for the subsequent state of the environment; or
wherein selecting the action comprises:
processing the observation for the time step using the action selection neural network and in accordance with current values of action selection neural network parameters, to generate an action selection output, and
selecting, using the action selection output, an action to be performed by the agent in response to the observation; and further comprising
updating the action selection neural network parameters using the first value estimate.

14. One or more computer-readable storage media storing instructions that when executed by one or more computers cause the one or more computers to perform the respective operations of the method of any one of claims 1-13.

15. A system comprising one or more computers and one or more storage devices storing instructions that when executed by one or more computers cause the one or more computers to perform the respective operations of the method of any one of claims 1-13.

## Patentansprüche

1. Verfahren zum Trainieren eines computerimplementierten neuronalen Netzwerksystems (100) für das Verstärkungslernen, das zur Steuerung eines Agenten (102) verwendet wird, der mit einer Umgebung (104) interagiert, um eine Aufgabe durchzuführen, wobei das Verfahren Folgendes umfasst:
Erlangen von Beobachtungen (106) von Zuständen der Umgebung;
Verarbeiten der Beobachtungen, um Handlungen auszuwählen, die der Agent als Reaktion auf die Beobachtungen durchführen soll, wobei der Agent als Reaktion auf die Handlungen Belohnungen (108) empfängt;
Trainieren des neuronalen Netzwerksystems für das Verstärkungslernen unter Verwendung von Zeitunterschiedsfehlern, wobei jeder Zeitunterschiedsfehler abhängig von mindestens einem Unterschied zwischen einer der Belohnungen und einer durch das neuronale Netzwerksystem für das Verstärkungslernen erzeugten Werteschätzung ist; wobei das Verfahren ferner Folgendes umfasst:
Bestimmen eines Wertes eines Skalierungsfaktors, wobei ein Quadrat des Skalierungsfaktors einen ersten Ausdruck aufweist, der von einer Varianz der Belohnungen abhängt;
Skalieren des Zeitunterschiedsfehlers mit dem Skalierungsfaktor, um einen skalierten Zeitunterschiedsfehler (122) zu bestimmen; und
Aktualisieren der Parameter des neuronalen Netzwerksystems für das Verstärkungslernen unter Verwendung des skalierten Zeitunterschiedsfehlers; wobei
i) der Agent ein mechanischer Agent ist, die Umgebung eine reale Umgebung ist und die Handlungen Handlungen sind, die durch den mechanischen Agenten in der realen Umgebung zum Durchführen der Aufgabe ausgeführt werden; oder der Agent eine Simulation eines mechanischen Agenten ist, die Umgebung eine Simulation einer realen Umgebung ist, die Handlungen simulierte Handlungen sind, die der simulierte mechanische Agent in der Simulation der realen Umgebung ausführt, um die Aufgabe durchzuführen, und wobei nach dem Trainieren das Verfahren verwendet wird, um den mechanischen Agenten in der realen Umgebung zu steuern, um die Aufgabe durchzuführen; oder
ii) die Umgebung eine reale Produktionsstätte oder Serviceeinrichtung ist, es sich beim Agenten um einen elektronischen Agenten handelt, der Anlagen in der Produktionsstätte oder Serviceeinrichtung steuert, um die Aufgabe durchzuführen.

2. Verfahren nach Anspruch 1, wobei der Zeitunterschiedsfehler zusätzlich abhängig von einer durch das neuronale Netzwerksystem für das Verstärkungslernen erzeugten zeitdiskontierten Werteschätzung ist, und wobei das Quadrat des Skalierungsfaktors einen zweiten Ausdruck beinhaltet, wobei das Verfahren ferner das Bestimmen eines Wertes für den zweiten Ausdruck umfasst durch:
Bestimmen einer Schätzung einer Varianz eines Zeitdiskontierungsfaktors der zeitdiskontierten Werteschätzung; Bestimmen einer Schätzung eines Erwartungswerts der quadrierten Renditen, wobei eine Rendite eine zeitdiskontierte Summe aus einer oder mehreren Belohnungen umfasst, die nach einem Zeitschritt des Verstärkungslernens empfangen wurden; und
Bilden eines Produkts aus der Schätzung der Varianz eines Zeitdiskontierungsfaktors und der Schätzung des Erwartungswerts der quadrierten Renditen.

3. Verfahren nach Anspruch 1 oder 2, wobei das neuronale Netzwerksystem für das Verstärkungslernen ein neuronales Netzwerk der Wertfunktion (110) umfasst, wobei das Verfahren Folgendes umfasst,
für jeden einer Vielzahl von Handlungsauswahl-Zeitschritten:
Erlangen der Beobachtung für einen aktuellen Zeitschritt, die einen aktuellen Zustand der Umgebung kennzeichnet;
Verarbeiten der Beobachtung für den aktuellen Zeitschritt unter Verwendung des neuronalen Netzwerkes der Wertfunktion und gemäß den aktuellen Werten der Parameter des neuronalen Netzwerkes der Wertfunktion, um eine aktuelle Werteschätzung bezüglich des aktuellen Zustands der Umgebung zu erzeugen;
Auswählen einer Handlung, die der Agent als Reaktion auf die Beobachtung durchführen soll, unter Verwendung der aktuellen Werteschätzung oder unter Verwendung eines neuronalen Handlungsauswahlnetzwerks, das anhand der durch das neuronale Netzwerk der Wertfunktion erzeugten Werteschätzungen aktualisiert wurde; und
Veranlassen des Agenten, die ausgewählte Handlung durchzuführen, und als Reaktion darauf Empfangen einer Belohnung für den aktuellen Zeitschritt, die den in der Umgebung erzielten Fortschritt kennzeichnet, der sich aus dem Durchführen der ausgewählten Handlung durch den Agenten ergibt, wobei die Umgebung in einen nächsten Zustand der Umgebung übergeht; und
wobei das Verfahren für jeden einer Vielzahl von Trainingszeitschritten ferner Folgendes umfasst:
Bestimmen eines Zeitunterschiedsfehlers zwischen einer ersten Werteschätzung für einen ersten der Trainingszeitschritte, die durch das Verarbeiten der Beobachtung für den ersten Zeitschritt unter Verwendung des neuronalen Netzwerkes der Wertfunktion erzeugt wurde, und einer Summe aus der Belohnung am ersten Zeitschritt und einer zeitdiskontierten Werteschätzung für einen nachfolgenden Zustand der Umgebung an einem nachfolgenden der Zeitschritte;
Bestimmen des Wertes des Skalierungsfaktors;
Skalieren des Zeitunterschiedsfehlers mit dem Skalierungsfaktor, um den skalierten Zeitunterschiedsfehler zu bestimmen; und
Aktualisieren der Werte der Parameter des neuronalen Netzwerkes der Wertfunktion unter Verwendung des skalierten Zeitunterschiedsfehlers.

4. Verfahren nach Anspruch 3, wobei das Bestimmen des Wertes des Skalierungsfaktors das Bestimmen einer Schätzung der Varianz der Belohnungen aus den in den Zeitschritten empfangenen Belohnungen und das Verwenden der Schätzung der Varianz der Belohnungen zum Bestimmen des ersten Ausdrucks umfasst.

5. Verfahren nach Anspruch 3 oder 4, wobei das Quadrat des Skalierungsfaktors einen zweiten Ausdruck beinhaltet, wobei das Verfahren ferner das Bestimmen eines Wertes für den zweiten Ausdruck umfasst durch:
Bestimmen einer Schätzung einer Varianz eines Zeitdiskontierungsfaktors, wobei der Zeitdiskontierungsfaktor ein Multiplikator der zeitdiskontierten Werteschätzung ist;
Bestimmen einer Schätzung eines Erwartungswerts der quadrierten Renditen, wobei eine Rendite eine zeitdiskontierte Summe aus einer oder mehreren Belohnungen umfasst, die nach einem Zeitschritt empfangen wurden;
Bilden eines Produkts aus der Schätzung der Varianz eines Zeitdiskontierungsfaktors und der Schätzung des Erwartungswerts der quadrierten Renditen.

6. Verfahren nach den Ansprüchen 2 bis 5, sofern abhängig von Anspruch 2, umfassend:
Aufrechterhalten eines neuronalen Netzwerkes der Zielwertfunktion mit Parametern des neuronalen Netzwerkes der Zielwertfunktion und der gleichen Struktur wie das neuronale Netzwerk der Wertfunktion;
Verarbeiten einer Beobachtung des nächsten Zustands der Umgebung unter Verwendung des neuronalen Netzwerkes der Zielwertfunktion, um eine Werteschätzung für den nachfolgenden Zustand der Umgebung zu bestimmen; und
Anwenden eines Zeitdiskontierungsfaktors auf die Werteschätzung für den nachfolgenden Zustand der Umgebung, um die zeitdiskontierte Werteschätzung für den nachfolgenden Zustand der Umgebung zu bestimmen.

7. Verfahren nach Anspruch 6, wobei das Quadrat des Skalierungsfaktors einen dritten Ausdruck beinhaltet, wobei das Verfahren ferner das Bestimmen eines Wertes für den dritten Ausdruck umfasst durch:
Bestimmen einer Schätzung eines Erwartungswerts eines quadrierten Unterschieds zwischen der ersten Werteschätzung und einer Werteschätzung für den Zustand der Umgebung im ersten Zeitschritt, die durch das Verarbeiten der Beobachtung für den ersten Zeitschritt unter Verwendung des neuronalen Netzwerkes der Zielwertfunktion bestimmt wird.

8. Verfahren nach einem der vorhergehenden Ansprüche, wobei das neuronale Netzwerk der Wertfunktion mehrere Köpfe aufweist, von denen jeder eine jeweilige erste Werteschätzung erzeugt, wobei das Verfahren Folgendes umfasst:
Bestimmen eines jeweiligen Wertes des Skalierungsfaktors für jeden Kopf; und
Skalieren eines jeweiligen Zeitunterschiedsfehlers für jeden Kopf mit dem Skalierungsfaktor, um einen jeweiligen skalierten Zeitunterschiedsfehler zum Aktualisieren der Werte der Parameter des neuronalen Netzwerkes der Wertfunktion zu bestimmen.

9. Verfahren nach einem der vorhergehenden Ansprüche, wobei der Zeitunterschiedsfehler ein *n*-Schritt-Zeitunterschiedsfehler ist, wobei das Verfahren Bestimmen des *n*-Schritt-Zeitunterschiedsfehlers zwischen einer Summe aus i) der Belohnung, ii) n-1 nachfolgenden Belohnungen und iii) einer zeitdiskontierten Werteschätzung für den *n*-ten nachfolgenden Zustand der Umgebung und einer oder der ersten Werteschätzung umfasst.

10. Verfahren nach einem der Ansprüche 1-9, umfassend:
Aufrechterhalten eines Erfahrungswiederholungsspeichers (150), der Erfahrungstupel speichert, die als Ergebnis der Interaktion des Agenten mit der Umgebung erzeugt wurden, wobei die Erfahrungstupel für jeden einer Vielzahl von Zeitschritten mindestens Folgendes identifizieren: die Beobachtung, die ausgewählte Handlung, die empfangene Belohnung und eine nächste Beobachtung; und
Abtasten der Erfahrungstupel in dem Erfahrungswiederholungsspeicher zum Durchführen der Vielzahl von Trainingszeitschritten, wobei insbesondere Abtasten unter Verwendung einer Priorität priorisiert wird, die abhängig von einer Größe des skalierten Zeitunterschiedsfehlers ist.

11. Verfahren nach einem der vorhergehenden Ansprüche, ferner umfassend Initialisieren des Wertes des Skalierungsfaktors auf einen Wert ungleich Null.

12. Verfahren nach einem der Ansprüche 3-11, wenn abhängig von Anspruch 3, wobei das Verfahren online durchgeführt wird, die Vielzahl von Trainingszeitschritten der Vielzahl von Handlungsauswahl-Zeitschritten entspricht und die erste Werteschätzung für den ersten Zeitschritt die aktuelle Werteschätzung für den aktuellen Zeitschritt ist.

13. Verfahren nach einem der Ansprüche 3-11, sofern abhängig von Anspruch 3, wobei das neuronale Netzwerk der Wertfunktion ein neuronales Netzwerk der Handlungswertfunktion (110) zum Bestimmen eines Handlungswerts für jede einer Vielzahl von möglichen Handlungen umfasst, wobei die aktuelle Werteschätzung verwendet wird, um einen Handlungswert für jede der möglichen Handlungen zu bestimmen, wobei Auswählen der Handlung, die durch den Agenten als Reaktion auf die Beobachtung durchzuführen ist, Auswählen der Handlung basierend auf dem Handlungswert für jede der möglichen Handlungen umfasst und wobei die zeitdiskontierte Werteschätzung für einen nachfolgenden Zustand der Umgebung zu einem nachfolgenden eines der Zeitschritte einen zeitdiskontierten Handlungswert für den nachfolgenden Zustand der Umgebung umfasst; oder
wobei Auswählen der Handlung Folgendes umfasst:
Verarbeiten der Beobachtung für den Zeitschritt unter Verwendung des neuronalen Handlungsauswahlnetzwerks und gemäß aktuellen Werten der Parameter des neuronalen Handlungsauswahlnetzwerks, um eine Handlungsauswahlausgabe zu erzeugen, und
Auswählen, unter Verwendung der Handlungsauswahlausgabe, einer Handlung, die der Agent als Reaktion auf die Beobachtung durchführen soll; und ferner umfassend
Aktualisieren der Parameter des neuronalen Handlungsauswahlnetzwerks unter Verwendung der ersten Werteschätzung.

14. Ein oder mehrere computerlesbare Speichermedien, die Anweisungen speichern, die bei Ausführung durch einen oder mehrere Computer den einen oder die mehreren Computer veranlassen, die jeweiligen Operationen des Verfahrens nach einem der Ansprüche 1-13 durchzuführen.

15. System, umfassend einen oder mehrere Computer und eine oder mehrere Speichervorrichtungen, die Anweisungen speichern, die, wenn sie durch den einen oder die mehreren Computer ausgeführt werden, den einen oder die mehreren Computer veranlassen, die jeweiligen Operationen des Verfahrens nach einem der Ansprüche 1-13 durchzuführen.

## Revendications

1. Procédé d'entraînement d'un système de réseau neuronal d'apprentissage par renforcement (100) mis en œuvre par ordinateur utilisé pour commander un agent (102) interagissant avec un environnement (104) pour réaliser une tâche, le procédé comprenant :
l'obtention d'observations (106) d'états de l'environnement ;
le traitement des observations pour sélectionner les actions destinées à être réalisées par l'agent en réponse aux observations, dans lequel l'agent reçoit des récompenses (108) en réponse aux actions ;
l'entraînement du système de réseau neuronal d'apprentissage par renforcement à l'aide d'erreurs de différence temporelle, dans lequel chaque erreur de différence temporelle dépend d'au moins une différence entre l'une des récompenses et une estimation de valeur générée par le système de réseau neuronal d'apprentissage par renforcement ; le procédé comprenant en outre :
la détermination d'une valeur d'un facteur d'échelle, dans lequel un carré du facteur d'échelle a un premier terme dépendant d'une variance des récompenses ;
la mise à l'échelle de l'erreur de différence temporelle par le facteur d'échelle pour déterminer une erreur de différence temporelle mise à l'échelle (122) ; et
la mise à jour de paramètres du système de réseau neuronal d'apprentissage par renforcement à l'aide de l'erreur de différence temporelle mise à l'échelle ; dans lequel
i) l'agent est un agent mécanique, l'environnement est un environnement du monde réel et les actions sont des actions entreprises par l'agent mécanique dans l'environnement du monde réel pour réaliser la tâche ; ou l'agent est une simulation d'un agent mécanique, l'environnement est une simulation d'un environnement du monde réel, les actions sont des actions simulées entreprises par l'agent mécanique simulé dans la simulation de l'environnement du monde réel pour réaliser la tâche, et dans lequel, après l'entraînement, le procédé est utilisé pour commander l'agent mécanique dans l'environnement du monde réel pour réaliser la tâche ; ou
ii) l'environnement est une usine de fabrication ou une installation de service du monde réel, l'agent est un agent électronique commandant des éléments d'équipement dans l'usine de fabrication ou l'installation de service pour réaliser la tâche.

2. Procédé selon la revendication 1, dans lequel l'erreur de différence temporelle dépend en outre d'une estimation de valeur actualisée dans le temps générée par le système de réseau neuronal d'apprentissage par renforcement, et dans lequel le carré du facteur d'échelle comporte un deuxième terme, le procédé comprenant en outre la détermination d'une valeur pour le deuxième terme en :
déterminant une estimation d'une variance d'un facteur d'actualisation dans le temps de l'estimation de valeur actualisée dans le temps ;
déterminant une estimation d'une valeur attendue de rendements au carré, dans lequel un rendement comprend une somme actualisée dans le temps d'une ou plusieurs récompenses reçues après une étape temporelle d'apprentissage par renforcement ; et
en formant un produit de l'estimation de la variance d'un facteur d'actualisation dans le temps et de l'estimation de la valeur attendue des rendements au carré.

3. Procédé selon la revendication 1 ou 2, dans lequel le système de réseau neuronal d'apprentissage par renforcement comprend un réseau neuronal à fonction de valeur (110), le procédé comprenant,
pour chacune d'une pluralité d'étapes temporelles de sélection d'action :
l'obtention de l'observation pour une étape temporelle actuelle caractérisant un état actuel de l'environnement ;
le traitement de l'observation pour l'étape temporelle actuelle à l'aide du réseau neuronal à fonction de valeur et conformément aux valeurs actuelles de paramètres de réseau neuronal à fonction de valeur, pour générer une estimation de valeur actuelle relative à l'état actuel de l'environnement ;
la sélection d'une action destinée à être réalisée par l'agent en réponse à l'observation, à l'aide de l'estimation de valeur actuelle ou à l'aide d'un réseau neuronal de sélection d'action mis à jour à l'aide d'estimations de valeur générées par le réseau neuronal à fonction de valeur ; et
le fait d'amener l'agent à réaliser l'action sélectionnée et, en réponse, la réception d'une récompense pour l'étape temporelle actuelle caractérisant les progrès effectués dans l'environnement à la suite de la réalisation, par l'agent, de l'action sélectionnée, l'environnement passant à un état suivant de l'environnement ; et
dans lequel le procédé comprend en outre, pour chacune d'une pluralité d'étapes temporelles d'entraînement :
la détermination d'une erreur de différence temporelle entre une première estimation de valeur pour une première étape des étapes temporelles d'entraînement générée en traitant l'observation pour la première étape temporelle à l'aide du réseau neuronal à fonction de valeur, et une somme de la récompense à la première étape temporelle et d'une estimation de valeur actualisée dans le temps pour un état ultérieur de l'environnement à une étape ultérieure des étapes temporelles ;
la détermination de la valeur du facteur d'échelle ;
la mise à l'échelle de l'erreur de différence temporelle par le facteur d'échelle pour déterminer l'erreur de différence temporelle mise à l'échelle ; et
la mise à jour des valeurs des paramètres de réseau neuronal à fonction de valeur à l'aide de l'erreur de différence temporelle mise à l'échelle.

4. Procédé selon la revendication 3, dans lequel la détermination de la valeur du facteur d'échelle comprend la détermination d'une estimation de la variance des récompenses à partir des récompenses reçues aux étapes temporelles, et l'utilisation de l'estimation de la variance des récompenses pour déterminer le premier terme.

5. Procédé selon la revendication 3 ou 4, dans lequel le carré du facteur d'échelle comporte un deuxième terme, le procédé comprenant en outre la détermination d'une valeur pour le deuxième terme en :
déterminant une estimation d'une variance d'un facteur d'actualisation dans le temps, dans lequel le facteur d'actualisation dans le temps est un multiplicateur de l'estimation de valeur actualisée dans le temps ;
déterminant une estimation d'une valeur attendue de rendements au carré, dans lequel un rendement comprend une somme actualisée dans le temps d'une ou plusieurs récompenses reçues après une étape temporelle ;
formant un produit de l'estimation de la variance d'un facteur d'actualisation dans le temps et de l'estimation de la valeur attendue des rendements au carré.

6. Procédé selon l'une quelconque des revendications 2 à 5 lorsqu'il dépend de la revendication 2, comprenant :
le maintien d'un réseau neuronal à fonction de valeur cible avec des paramètres de réseau neuronal à fonction de valeur cible et la même structure que le réseau neuronal à fonction de valeur ;
le traitement d'une observation de l'état suivant de l'environnement à l'aide du réseau neuronal à fonction de valeur cible pour déterminer une estimation de valeur pour l'état ultérieur de l'environnement ; et
l'application d'un facteur d'actualisation dans le temps à l'estimation de valeur pour l'état ultérieur de l'environnement pour déterminer l'estimation de valeur actualisée dans le temps pour l'état ultérieur de l'environnement.

7. Procédé selon la revendication 6, dans lequel le carré du facteur d'échelle comporte un troisième terme, le procédé comprenant en outre la détermination d'une valeur pour le troisième terme en :
déterminant une estimation d'une valeur attendue d'une différence au carré entre la première estimation de valeur et une estimation de valeur pour l'état de l'environnement à la première étape temporelle déterminée en traitant l'observation pour la première étape temporelle à l'aide du réseau neuronal à fonction de valeur cible.

8. Procédé selon une quelconque revendication précédente, dans lequel le réseau neuronal à fonction de valeur a de multiples têtes, chacune générant une première estimation de valeur respective, le procédé comprenant :
la détermination d'une valeur respective du facteur d'échelle pour chaque tête ; et
la mise à l'échelle d'une erreur de différence temporelle respective pour chaque tête par le facteur d'échelle pour déterminer une erreur de différence temporelle mise à l'échelle respective pour la mise à jour des valeurs des paramètres de réseau neuronal à fonction de valeur.

9. Procédé selon une quelconque revendication précédente, dans lequel l'erreur de différence temporelle est une erreur de différence temporelle à *n* étapes, le procédé comprenant la détermination de l'erreur de différence temporelle à *n* étapes entre une somme de i) la récompense ii) des n-1 récompenses ultérieures et iii) d'une estimation de valeur actualisée dans le temps pour le *n*ème état ultérieur de l'environnement, et une ou la première estimation de valeur.

10. Procédé selon l'une quelconque des revendications 1 à 9, comprenant :
le maintien d'une mémoire de relecture d'expérience (150) qui stocke des tuples d'expérience générés à la suite de l'interaction de l'agent avec l'environnement, dans lequel les tuples d'expérience identifient, pour chacune d'une pluralité d'étapes temporelles, au moins : l'observation, l'action sélectionnée, la récompense reçue et une observation suivante ; et
l'échantillonnage des tuples d'expérience dans la mémoire de relecture d'expérience pour réaliser la pluralité d'étapes temporelles d'entraînement, en particulier en priorisant l'échantillonnage à l'aide d'une priorité dépendant d'une ampleur de l'erreur de différence temporelle mise à l'échelle.

11. Procédé selon une quelconque revendication précédente, comprenant en outre l'initialisation de la valeur du facteur d'échelle à une valeur non nulle.

12. Procédé selon l'une quelconque des revendications 3 à 11 lorsqu'il dépend de la revendication 3, dans lequel le procédé est réalisé en ligne, la pluralité d'étapes temporelles d'entraînement correspond à la pluralité d'étapes temporelles de sélection d'action, et la première estimation de valeur pour la première étape temporelle est l'estimation de valeur actuelle pour l'étape temporelle actuelle.

13. Procédé selon l'une quelconque des revendications 3 à 11 lorsqu'il dépend de la revendication 3, dans lequel le réseau neuronal à fonction de valeur comprend un réseau neuronal à fonction de valeur d'action (110) destiné à déterminer une valeur d'action pour chacune d'une pluralité d'actions possibles, dans lequel l'estimation de valeur actuelle est utilisée pour déterminer une valeur d'action pour chacune des actions possibles, dans lequel la sélection de l'action destinée à être réalisée par l'agent en réponse à l'observation comprend la sélection de l'action sur la base de la valeur d'action pour chacune des actions possibles, et dans lequel l'estimation de valeur actualisée dans le temps pour un état ultérieur de l'environnement à une étape ultérieure des étapes temporelles comprend une valeur d'action actualisée dans le temps pour l'état ultérieur de l'environnement ; ou
dans lequel la sélection de l'action comprend :
le traitement de l'observation pour l'étape temporelle à l'aide du réseau neuronal de sélection d'action et conformément aux valeurs actuelles de paramètres de réseau neuronal de sélection d'action, pour générer une sortie de sélection d'action ; et
la sélection, à l'aide de la sortie de sélection d'action, d'une action destinée à être réalisée par l'agent en réponse à l'observation ; et comprenant en outre
la mise à jour des paramètres de réseau neuronal de sélection d'action à l'aide de la première estimation de valeur.

14. Un ou plusieurs supports de stockage lisibles par ordinateur stockant des instructions qui, lorsqu'elles sont exécutées par un ou plusieurs ordinateurs, amènent les un ou plusieurs ordinateurs à réaliser les opérations respectives du procédé selon l'une quelconque des revendications 1 à 13.

15. Système comprenant un ou plusieurs ordinateurs et un ou plusieurs dispositifs de stockage stockant des instructions qui, lorsqu'elles sont exécutées par un ou plusieurs ordinateurs, amènent les un ou plusieurs ordinateurs à réaliser les opérations respectives du procédé selon l'une quelconque des revendications 1 à 13.
